# EUROPÄISCHE PATENTSCHRIFT

(11) **EP 3 237 509 B1**
(45) Veröffentlichungstag und Bekanntmachung des Hinweises auf die Patenterteilung: **24.06.2020**
(21) Anmeldenummer: 15813777.8
(22) Anmeldetag: 15.12.2015
(51) Int. Cl.: C08J 9/36, C08J 9/14, B29C 44/56, C08J 9/00, B32B 5/18, B32B 5/24, B32B 7/08

(54) **FASERVERSTÄRKUNG VON TREIBMITTELHALTIGEN SCHAUMSTOFFEN**
FIBRE REINFORCEMENT OF FOAMS CONTAINING PROPELLANTS
RENFORCEMENT À L'AIDE DE FIBRES DE MOUSSES CONTENANT DES GAZ PROPULSEURS

(30) Priorität: 22.12.2014 EP 14199631
(43) Veröffentlichungstag der Anmeldung: 01.11.2017
(73) Patentinhaber: BASF SE, 67056 Ludwigshafen (DE)
(72) Erfinder: RUCKDAESCHEL, Holger, 67487 St Martin (DE); ARBTER, Rene, 67251 Freinsheim (DE); STEIN, Robert, 67122 Altrip (DE); LONGO-SCHEDEL, Daniela, 53757 Sankt Augustin (DE); DIEHLMANN, Tim, 67283 Obrigheim-Colgenstein (DE); SAMPATH, Bangaru Dharmapuri Sriramulu, 67063 Ludwigshafen (DE); GUTMANN, Peter, 76199 Karlsruhe (DE); TERRENOIRE, Alexandre, 67071 Ludwigshafen (DE); HARTENSTEIN, Markus, 76761 Ruelzheim (DE); KIRGIS, Andreas, 68199 Mannheim (DE); MORINO, Alessio, 10090 Castagneto Po (IT); DAUN, Gregor, 69151 Neckargemünd (DE); MARTIN, Marc Claude, 49448 Lemfoerde (DE); MERKEL, Peter, 67308 Zellertal (DE); KICIAK, Thomas, 67071 Ludwigshafen (DE)
(74) Vertreter: BASF IP Association
(86) Internationale Anmeldenummer: PCT/EP2015/079806
(87) Internationale Veröffentlichungsnummer: WO 2016/102245

(56) Entgegenhaltungen:
- EP-A1- 0 602 262
- US-A- 3 030 256

## Beschreibung

Die vorliegende Erfindung betrifft ein Verfahren zur Herstellung eines Formkörpers aus treibmittelhaltigem Schaumstoff mit mindestens einer Faser (F), wobei die mindestens eine Faser (F) in den treibmittelhaltigen Schaumstoff teilweise eingebracht wird. Die beiden nicht vom treibmittelhaltigen Schaumstoff umschlossenen Enden der jeweiligen Faser (F) ragen somit aus einer Seite des entsprechenden Formkörpers heraus. Gegenstand der vorliegenden Erfindung ist außerdem der Formköper als solcher. Ein weiterer Gegenstand der vorliegenden Erfindung ist ein Paneel, das mindestens einen solchen Formkörper, hergestellt nach dem erfindungsgemäßen Verfahren, sowie mindestens eine weitere Schicht (S1) umfasst. Außerdem Gegenstand der vorliegenden Erfindung ist die Herstellung der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite der zweiten Oberfläche des zellulären Materials wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass es sich bei dem zellulären Material zur Herstellung eines Kerns in einer sandwichartigen Komponente um treibmittelhaltige Schaumstoffe handelt. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass treibmittelhaltige Schaumstoffe zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass einzelne Fasern oder Faserbündel in das zelluläre Material zur Verstärkung eingebaut werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von ≤ 10 µm und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

US 3,030,256 betrifft laminierte Paneele, zu deren Herstellung ein Kern, der aus einem Schaumstoff bzw. einem mit Hilfe eines Treibmittels hergestellten expandierten Polymer hergestellt ist, mit Fasern verstärkt wird. Als Material für den Kern sind expandiertes und extrudiertes Polystyrol sowie Phenole, Epoxide und Polyurethane beschrieben. Zum Einbringen der Fasern wird mit einer Nadel von der ersten Seite des Kerns zur zweiten Seite des Kerns ein Loch erzeugt und mit derselben Nadel ein Faserbündel von der zweiten Seite auf die erste Seite durch das Loch gezogen, sodass sich das Faserbündel teilweise innerhalb des Kerns befindet und teilweise zur ersten und zur zweiten Seite herausragt. Das Fasermaterial wird in einem Winkel von 0 ° relativ zur Dickenrichtung des Kerns in den Kern eingebracht.

Die der vorliegenden Erfindung zugrundeliegende Aufgabe besteht in der Bereitstellung eines neuen Verfahrens zur Herstellung von faserverstärkten Formkörpern sowie in der Bereitstellung von neuen faserverstärkten Paneelen.

Gelöst wird diese Aufgabe erfindungsgemäß durch ein Verfahren zur Herstellung eines Formkörpers mit mindestens einer Faser (F), wobei in einen Formkörper aus treibmittelhaltigem Schaumstoff mindestens eine Faser (F) in den treibmittelhaltigen Schaumstoff teilweise eingebracht wird, wodurch sich die Faser (F) mit einem Faserbereich (FB2) innerhalb des Formkörpers befindet und von dem treibmittelhaltigen Schaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Formkörper mehr als 1000 Fasern (F) pro m² umfasst und wobei im treibmittelhaltigen Schaumstoff des Formkörpers zum Zeitpunkt des teilweisen Einbringens von mindestens einer Faser (F) mindestens 5 Gew.-% der Menge an mindestens einem Treibmittel noch enthalten ist, bezogen auf die Menge an dem mindestens einen Treibmittel, die zur Herstellung des treibmittelhaltigen Schaumstoffs eingesetzt wird, wobei das mindestens eine Treibmittel des treibmittelhaltigen Schaumstoffs einen Siedepunkt bei Normaldruck von mindestens 20 °C aufweist und/oder ein organisches Treibmittel mit einem Molekulargewicht von mindestens 30 g/mol ist.

Durch das erfindungsgemäße Verfahren werden Formkörper erhalten, die verbesserte mechanische Eigenschaften aufweisen. Zudem wird durch das erfindungsgemäße Verfahren die Stabilisierungszeit für den treibmittelhaltigen Schaumstoff reduziert. Dies ist insbesondere der Fall, da durch das Einbringen von Fasern (F) in den treibmittelhaltigen Schaumstoff ein rascherer Treibmittelaustausch, insbesondere ein rascherer Gasaustausch, verbunden mit einem rascheren Wärmeaustausch mit der Umgebung erzielt wird. Dadurch verringert sich die nach der Herstellung des treibmittelhaltigen Schaumstoffs üblicherweise benötigte Lagerzeit für den treibmittelhaltigen Schaumstoff deutlich, speziell bei Verwendung von Schaumstoff- / Treibmittelkombinationen, bei denen das Treibmittel langsam desorbiert. Durch die Verfügbarkeit einer größeren Auswahl an Treibmitteln und Treibmittelanteilen bei gleichzeitig geringen Stabilisierungszeiten kann somit das Herstellverfahren des Schaumstoffes, die resultierende Schaumstruktur und die Reifezeit (benötigte Zeit zur Desorption des Treibmittels) unabhängiger voneinander optimiert werden.

Vorteilhafte Effekte werden außerdem erzielt, wenn das erfindungsgemäße Verfahren möglichst zeitnah an die Herstellung des treibmittelhaltigen Schaumstoffs durchgeführt wird. Dann weisen die treibmittelhaltigen Schaumstoffe besonders niedrige Durchnähwiderstände auf. Daher werden die benötigten Durchnähkräfte reduziert, wodurch der Verschleiß der in einer bevorzugten Ausführungsform des erfindungsgemäßen Verfahrens verwendeten Nadel deutlich reduziert wird. Zudem kann der Durchsatz erhöht werden. Bedingt durch den Wärmeaustausch sowie den Treibmittelaustausch (Treibmitteldesorption) schrumpft der treibmittelhaltige Schaumstoff zudem, wodurch die Fasern (F) besser in dem treibmittelhaltigen Schaumstoff fixiert werden. Der Auszugswiderstand der Faser (F) im erfindungsgemäß hergestellten Formkörper steigt daher signifikant.

Die erfindungsgemäß hergestellten Formkörper zeichnen sich außerdem in vorteilhafter Weise durch eine geringe Harzaufnahme bei gleichzeitig guter Grenzflächenanbindung aus. Dieser Effekt ist insbesondere dann von Bedeutung, wenn die erfindungsgemäß hergestellten Formkörper zu den erfindungsgemäßen Paneelen weiterverarbeitet werden.

Eine weitere Verbesserung der Anbindung bei gleichzeitig reduzierter Harzaufnahme wird erfindungsgemäß durch die Faserverstärkung der treibmittelhaltigen Schaumstoffe in den erfindungsgemäß hergestellten Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den treibmittelhaltigen Schaumstoff eingebracht werden. Die Fasern bzw. Faserbündel werden an den jeweiligen treibmittelhaltigen Schaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäß hergestellten Formkörpers unter Ausbildung eines erfindungsgemäßen Paneels aufgebracht. Solche Paneele werden auch als "Sandwichmaterialien" bezeichnet, wobei der erfindungsgemäß hergestellte Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Sandwichkern die Harzaufnahme des Kernmaterials zum Gesamtgewicht bei. Durch die erfindungsgemäß hergestellten Formkörper bzw. die erfindungsgemäßen Paneele kann die Harzaufnahme jedoch verringert werden, wodurch Gewicht sowie Kosten eingespart werden können.

Ein weiterer Vorteil der erfindungsgemäß hergestellten Formkörper bzw. Paneele ist darin zu sehen, dass aufgrund der Verwendung von treibmittelhaltigen Schaumstoffen bzw. der damit verbundenen Herstellung das Anbringen von integrierten Strukturen wie Schlitze oder Löcher auf den Oberflächen der Formkörper sowie die Weiterverarbeitung der Formkörper relativ einfach ist. Derartige Strukturen werden beim Einsatz von solchen Formkörpern (Kernmaterialien) beispielsweise häufig zum Drapieren in gekrümmte Strukturen (tiefe Schlitze), zur Verbesserung der Verarbeitbarkeit durch Flüssigharzprozesse wie der Vakuuminfusion (Löcher) und zur Beschleunigung der genannten Verarbeitungsprozess (flache Schlitze) eingebracht.

Für die Herstellung der erfindungsgemäßen Paneele ist es außerdem von Vorteil, wenn die Formkörper einen möglichst geringen Anteil an flüchtigen Bestandteilen und im speziellen an noch enthaltenen Treibmitteln aufweisen. Durch die Einbringung der Fasern in den Schaumstoff zum Erhalt der Formkörper kann lokal an allen Stellen, die mit dem Harzsystem in Kontakt kommen, die Treibmittelmenge sehr rasch und stark reduziert werden. Dadurch werden Fehlstellen im Laminat durch Gas- bzw. Treibmitteleinschlüsse reduziert bzw. vermieden und die Qualität bzw. die mechanischen Eigenschaften verbessert.

Durch die Einbringung der Fasern wird zudem die Wärme infolge der exothermen Reaktion des Harzsystems besser verteilt. Dadurch werden Wärmegradienten zwischen der Ober- und Unterseite des Paneels reduziert. Gleichzeitig wird die Wärme im Formkörpervolumen besser verteilt. Gerade für Schaumstoffe mit geringer Warmformstabilität ergeben sich damit Vorteile.

Weitere Verbesserungen/Vorteile können dadurch erzielt werden, dass die Fasern in einem Winkel α im Bereich von 0° bis 60° in Bezug zur Dickenrichtung (d) des treibmittelhaltigen Schaumstoffs in den treibmittelhaltigen Schaumstoff eingebracht werden, besonders bevorzugt von 0° bis 45°. Generell ist das Einbringen der Fasern in einem Winkel α von 0°bis < 90° technisch durchführbar.

Zusätzliche Verbesserungen/Vorteile können erzielt werden, wenn die Fasern nicht nur parallel zueinander in den treibmittelhaltigen Schaumstoff eingebracht werden, sondern weitere Fasern in einem Winkel β zueinander, der vorzugsweise im Bereich von > 0 bis 180° liegt. Dadurch wird zusätzlich eine Verbesserung der mechanischen Eigenschaften des erfindungsgemäßen Formkörpers erzielt.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei denen die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß wird bei dem Verfahren zur Herstellung eines Formkörpers mit mindestens einer Faser (F) in einen Formkörper aus treibmittelhaltigem Schaumstoff mindestens eine Faser (F) eingebracht.

Grundsätzlich enthält der treibmittelhaltige Schaumstoff mindestens ein Treibmittel sowie einen Schaumstoff. Der Schaumstoff kann auf Basis aller dem Fachmann bekannten Polymere sein.

Beispielsweise ist der Schaumstoff des treibmittelhaltigen Schaumstoffs auf Basis von mindestens einem Polymer, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid oder ein Gemisch davon, vorzugsweise ist das Polymer ausgewählt aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer oder ein Gemisch aus aus Styrol hergestellten Copolymeren, besonders bevorzugt ist das Polymer Polystyrol, ein Gemisch aus Polystyrol und Poly(2,6-Dimethylphenylenoxid), ein Gemisch aus einem Styrol-Maleinsäureanhydrid-Polymer und einem Styrol-Acrylnitril-Polymer oder ein Styrol-Maleinsäureanhydrid-Polymer (SMA).

Als Schaumstoffe sind außerdem thermoplastische Elastomere geeignet. Thermoplastische Elastomere sind dem Fachmann als solche bekannt. Polyphenylenoxid ist vorzugsweise Poly(2,6-Dimethylphenylenether), das auch als Poly(2,6-Dimethylphenylenoxid) bezeichnet wird.

Geeignete aus Phenylen hergestellte Copolymere sind dem Fachmann bekannt. Geeignete Comonomere zu Phenylenoxid sind dem Fachmann ebenfalls bekannt.

Ein aus Styrol hergestelltes Copolymer weist vorzugsweise als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

Der treibmittelhaltige Schaumstoff enthält mindestens ein Treibmittel. Er kann sowohl genau ein Treibmittel als auch zwei oder mehrere Treibmittel enthalten. Der treibmittelhaltige Schaumstoff enthält bei der Herstellung den maximalen Treibmittelgehalt. "Bei der Herstellung" bedeutet unmittelbar bevor der Schaumstoff expandiert, also unmittelbar vor der Desorption des mindestens einen Treibmittels. Im Falle eines Extrusionsschaumstoffs also unmittelbar vor Austritt aus der Düsenöffnung. Durch Diffusionsvorgänge während der Schaumexpansion und vor allem aus dem Schaumstoff nach dessen Herstellung diffundiert das mindestens eine Treibmittel aus.

Der maximale Treibmittelgehalt bei der Herstellung liegt üblicherweise im Bereich von 1 bis 15 Gew.-%, bevorzugt im Bereich von 2 bis 10 Gew.-%, insbesondere bevorzugt im Bereich von 3 bis 8 Gew.-% des mindestens einen Treibmittels, bezogen auf das Gesamtgewicht des treibmittelhaltigen Schaumstoffs.

Das Gewichtsverhältnis von Treibmittel zu Schaumstoff in dem treibmittelhaltigen Schaumstoff hängt von einer Vielzahl von Faktoren ab, beispielsweise vom Treibmittel, der Schaumstoffstruktur, dem geschäumten Polymer, den Lagerungsbedingungen und dem Zeitpunkt während des Herstellungsverfahrens.

Geeignete Treibmittel sind dem Fachmann als solche bekannt und beispielsweise ausgewählt aus der Gruppe bestehend aus Kohlenstoffdioxid, Alkanen wie Propan, Isobutan und Pentan, Alkoholen wie Methanol, 1-Propanol, 2-Propanol, 1-Butanol, 2-Butanol, 2-Methylpropanol und tert-Butanol, Ethern wie Dimethylether, Ketonen wie Aceton oder Methylethylketonen, halogenierte Kohlenwasserstoffe wie Hydrofluorpropen, Wasser, Stickstoff und Mischungen aus diesen.

Erfindungsgemäß weist das mindestens eine Treibmittel des treibmittelhaltigen Schaumstoffs einen Siedepunkt bei Normaldruck von mindestens 20 °C auf und/oder ist ein organisches Treibmittel mit einem Molekulargewicht von mindestens 30g/mol.

Vorzugsweise erfüllt mindestens eines der Treibmittel des treibmittelhaltigen Schaumstoffs im erfindungsgemäßen Verfahren mindestens eine der folgenden Optionen:
i) Mindestens eines der Treibmittel des treibmittelhaltigen Schaumstoffs weist einen Siedepunkt bei Normaldruck von mindestens 35 °C und bevorzugt mindestens 60 °C auf und/oder
ii) mindestens eines der Treibmittel des treibmittelhaltigen Schaumstoffs ist ein organisches Treibmittel mit einem Molekulargewicht von mindestens 45 g/mol, bevorzugt mindestens 55 g/mol.

Bevorzugt erfüllen alle Treibmittel des treibmittelhaltigen Schaumstoffs zumindest eine der beiden vorstehend beschriebenen Optionen.

Mindestens eines der Treibmittel des treibmittelhaltigen Schaumstoffs weist einen Siedepunkt von höchstens 400 °C, bevorzugt von höchstens 350 °C und insbesondere bevorzugt von höchstens 300 °C auf.

Mindestens eines der Treibmittel, bevorzugt alle Treibmittel, des treibmittelhaltigen Schaumstoffs weist also beispielsweise ein Siedepunkt im Bereich von 20 bis 400 °C, bevorzugt im Bereich von 35 bis 350 °C, insbesondere bevorzugt im Bereich von 60 bis 200 °C, auf.

In einer weiteren Ausführungsform weist mindestens eines der Treibmittel des treibmittelhaltigen Schaumstoffs einen Siedepunkt im Bereich von -200 °C bis 200 °C, bevorzugt im Bereich von -100 °C bis 150 °C und insbesondere bevorzugt im Bereich von -80 °C bis 120 °C auf.

Der Siedepunkt des mindestens einen Treibmittels bezieht sich jeweils auf den Siedepunkt bei Normaldruck, also bei 1013 mbar.

Mindestens eines der Treibmittel ist vorzugsweise ein organisches Treibmittel mit einem Molekulargewicht von höchstens 200 g/mol, bevorzugt höchstens 180 g/mol und insbesondere bevorzugt höchstens 150 g/mol und insbesondere 100 g/mol.

Mindestens eines der Treibmittel, bevorzugt alle Treibmittel, des treibmittelhaltigen Schaumstoffs ist also vorzugsweise eine organisches Treibmittel mit einem Molekulargewicht von 30 bis 200 g/mol, bevorzugt im Bereich von 45 bis 180 g/mol, besonders bevorzugt im Bereich von 55 bis 150 g/mol und am meisten bevorzugt im Bereich von 55 bis 100 g/mol.

Im Allgemeinen ist mindestens eines der Treibmittel des treibmittelhaltigen Schaumstoffs ein organisches Treibmittel mit einem Molekulargewicht im Bereich von 16 bis 250 g/mol, bevorzugt im Bereich von 30 bis 200 g/mol und insbesondere bevorzugt im Bereich von 46 bis 180 g/mol.

Organische Treibmittel sind dem Fachmann als solche bekannt, beispielsweise ist das organische Treibmittel ausgewählt aus der Gruppe bestehend aus Alkanen wie Propan, Isobutan und Pentan, Alkoholen wie Methanol, 1-Propanol, 2-Propanol, 1-Butanol, 2-Butanol, 2-Methylpropanol und tert-Butanol, Ethern wie Dimethylether, Ketonen wie Aceton oder Methylethylketonen, halogenierte Kohlenwasserstoffe wie Hydrofluorpropen.

Besonders bevorzugt gelten die vorstehend beschriebenen Ausführungen bezüglich des Siedepunktes und des Molekulargewichts für alle Treibmittel des treibmittelhaltigen Schaumstoffs.

Beispielsweise ist das mindestens eine Treibmittel, bevorzugt alle Treibmittel, des treibmittelhaltigen Schaumstoffs, ausgewählt aus der Gruppe bestehend aus Schwefelhexafluorid, Wasser, Ethan, n-Propan, n-Butan, n-Pentan, n-Heptan, iso-Pentan, cyclo-Pentan, cyclo-Hexan, Ethanol, Propanol, Aceton, Methylethylketon, Essigsäuremethylester, Essigsäureethylester, Dimethylether, n-Hexan, n-Heptan, Furan, Tetrahydrofuran, Methylpropylether, iso-Butan, Methanol, tert.-Butanol.

Bevorzugt ist das mindestens eine Treibmittel, bevorzugt alle Treibmittel, des treibmittelhaltigen Schaumstoffs, ausgewählt aus der Gruppe bestehend aus Ethan, n-Propan, n-Butan, n-Pentan, n-Heptan, iso-Pentan, cyclo-Pentan, cyclo-Hexan, Ethanol, Propanol, Aceton, Methylethylketon, Essigsäuremethylester, Essigsäureethylester, Dimethylether, n-Hexan, n-Heptan, Furan, Tetrahydrofuran, Methylpropylether, iso-Butan, Methanol, tert.-Butanol.

Besonders bevorzugt ist das mindestens eine Treibmittel, bevorzugt alle Treibmittel, des treibmittelhaltigen Schaumstoffs, ausgewählt aus der Gruppe bestehend aus Ethan, n-Propan, n-Butan, n-Pentan, n-Heptan, iso-Pentan, cyclo-Pentan, cyclo-Hexan, Ethanol, Propanol, Aceton, Methylethylketon, Essigsäuremethylester, Essigsäureethylester, n-Hexan, n-Heptan, Furan, Tetrahydrofuran, Methylpropylether, Methanol und tert.-Butanol.

Es ist außerdem bevorzugt, dass keines der Treibmittel des treibmittelhaltigen Schaumstoffs ein halogenhaltiger Kohlenwasserstoff ist.

Verfahren zur Herstellung von treibmittelhaltigen Schaumstoffen sind dem Fachmann als solche bekannt. Beispielsweise kann der treibmittelhaltige Schaumstoff hergestellt werden in einem Partikelschäumverfahren, einem Extrusionsschäumverfahren, einem Reaktivschäumverfahren und/oder einem Batchschäumverfahren.

Der treibmittelhaltige Schaumstoff ist dann beispielsweise ein Partikelschaumstoff, ein Extrusionsschaumstoff, ein Reaktivschaumstoff und/oder ein Batchschaumstoff. Vorzugsweise ist der treibmittelhaltige Schaumstoff ein Extrusionsschaumstoff. Insbesondere ist der treibmittelhaltige Schaumstoff ein Extrusionsschaumstoff, der in einem Verfahren umfassend die folgenden Schritte hergestellt worden ist:
I) Bereitstellen einer Polymerschmelze in einem Extruder,
II) Einbringen von zumindest einem Treibmittel in die in Schritt I) bereitgestellte Polymerschmelze unter Erhalt einer schäumbaren Polymerschmelze,
III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums,
IV) Kalibrieren des expandierten Schaums aus Schritt III), indem der expandierte Schaum durch ein formgebendes Werkzeug durchgeführt wird, unter Erhalt des Extrusionsschaumstoffs,
V) gegebenenfalls spanende Bearbeitung des in Schritt IV) erhaltenen Extrusionsschaumstoffs,
wobei
i) die in Schritt I) bereitgestellte Polymerschmelze gegebenenfalls mindestens ein Additiv enthält, und/oder
ii) gegebenenfalls während Schritt II) zu der Polymerschmelze und/oder zwischen Schritt II) und Schritt III) zu der schäumbaren Polymerschmelze mindestens ein Additiv gegeben wird, und/oder
iii) gegebenenfalls während Schritt III) auf den expandierten Schaum und/oder während Schritt IV) auf den expandierten Schaum mindestens ein Additiv aufgebracht wird, und/oder
iv) gegebenenfalls während und/oder direkt im Anschluss an Schritt IV) auf den Extrusionsschaumstoff mindestens eine Schicht (S2) aufgebracht wird.

Zur Bereitstellung der Polymerschmelze in dem Extruder in Schritt I) eignen sich prinzipiell alle dem Fachmann bekannten Methoden, beispielsweise kann die Polymerschmelze in dem Extruder bereitgestellt werden, indem ein bereits fertig polymerisiertes Polymer aufgeschmolzen wird. Das Polymer kann direkt in dem Extruder aufgeschmolzen werden, ebenso ist es möglich, das Polymer in geschmolzener Form dem Extruder zuzuführen und so die Polymerschmelze in Schritt I) in dem Extruder bereitzustellen. Ebenso ist es möglich, dass die Polymerschmelze in Schritt I) bereitgestellt wird, indem die entsprechenden zur Herstellung des Polymers der Polymerschmelze benötigten Monomere zu dem Polymer miteinander in dem Extruder reagieren und so die Polymerschmelze bereitgestellt wird.

Unter einer Polymerschmelze wird vorliegend verstanden, dass das Polymer oberhalb der Schmelztemperatur (T_{M}) bei teilkristallinen Polymeren bzw. der Glasübergangstemperatur (T_{G}) bei amorphen Polymeren vorliegt.

Üblicherweise liegt die Temperatur der Polymerschmelze in Verfahrensschritt I) im Bereich von 100 bis 450 °C, bevorzugt im Bereich von 150 bis 350 °C und insbesondere bevorzugt im Bereich von 160 bis 300 °C.

In Schritt II) wird zumindest ein Treibmittel in die in Schritt I) bereitgestellte Polymerschmelze eingebracht. Verfahren hierzu sind dem Fachmann als solche bekannt.

Für das Treibmittel gelten die zuvor beschriebenen Ausführungen und Bevorzugungen.

In Schritt II) wird so die schäumbare Polymerschmelze erhalten. Die schäumbare Polymerschmelze enthält üblicherweise im Bereich von 1 bis 15 Gew.-% des zumindest einen Treibmittels, bevorzugt im Bereich von 2 bis 10 Gew.-% und insbesondere bevorzugt im Bereich von 3 bis 8 Gew.-%, jeweils bezogen auf das Gesamtgewicht der schäumbaren Polymerschmelze.

Der Druck im Extruder in Schritt II) liegt üblicherweise im Bereich von 20 bis 500 bar, bevorzugt im Bereich von 50 bis 400 bar und insbesondere bevorzugt im Bereich von 60 bis 300 bar.

In Schritt III) wird die in Schritt II) erhaltene schäumbare Polymerschmelze durch zumindest eine Düsenöffnung aus dem Extruder in einen Bereich niedrigeren Drucks extrudiert, wobei die schäumbare Polymerschmelze expandiert unter Erhalt des expandierten Schaums.

Verfahren zur Extrusion der schäumbaren Polymerschmelze sind dem Fachmann als solche bekannt.

Für die Extrusion der schäumbaren Polymerschmelze eignen sich alle dem Fachmann bekannten Düsenöffnungen. Die Düsenöffnung kann jede beliebige Form aufweisen, beispielsweise kann sie rechteckig, kreisförmig, ellipsenförmig, quadratisch oder hexagonal sein. Bevorzugt sind rechteckige Schlitzdüsen und kreisförmige Runddüsen.

In einer Ausführungsform wird die schäumbare Polymerschmelze durch genau eine Düsenöffnung, vorzugsweise durch eine Schlitzdüse, extrudiert. In einer weiteren Ausführungsform wird die schäumbare Polymerschmelze durch eine Vielzahl von Düsenöffnungen, vorzugsweise kreisförmige oder hexagonale Düsenöffnungen, extrudiert unter Erhalt einer Vielzahl von Strängen, wobei die Vielzahl von Strängen direkt nach dem Austreten aus den Düsenöffnungen zusammengeführt werden und den expandierten Schaum ausbilden. Die Vielzahl von Strängen kann auch erst in Schritt IV) durch das Durchführen durch das formgebende Werkzeug zusammengeführt werden.

Vorzugsweise ist die zumindest eine Düsenöffnung beheizt. Insbesondere bevorzugt wird die Düsenöffnung mindestens auf die Glasübergangstemperatur (T_{G}) des in der in Schritt I) bereitgestellten Polymerschmelze enthaltenen Polymers, wenn das Polymer ein amorphes Polymer ist, und mindestens auf die Schmelztemperatur (T_{M}) des in der in Schritt I) bereitgestellten Polymerschmelze enthaltenen Polymers, wenn das Polymer ein teilkristallines Polymer ist, geheizt, beispielsweise liegt die Temperatur der Düsenöffnung im Bereich von 80 bis 400 °C, vorzugsweise im Bereich von 100 bis 350 °C und insbesondere bevorzugt im Bereich von 110 bis 300 °C.

Die schäumbare Polymerschmelze wird in Schritt III) in einen Bereich niedrigeren Drucks extrudiert. Der Druck im Bereich niedrigeren Drucks liegt üblicherweise im Bereich von 0,05 bis 5 bar, bevorzugt im Bereich von 0,5 bis 1,5 bar.

Der Druck mit dem die schäumbare Polymerschmelze in Schritt III) aus der Düsenöffnung extrudiert wird, liegt üblicherweise im Bereich von 20 bis 600 bar, bevorzugt im Bereich von 40 bis 300 bar und insbesondere bevorzugt im Bereich von 50 bis 250 bar.

In Schritt IV) wird der expandierte Schaum aus Schritt III) kalibriert, indem der expandierte Schaum durch ein formgebendes Werkzeug durchgeführt wird unter Erhalt des Extrusionsschaumstoffs.

Durch die Kalibrierung des expandierten Schaums wird die Außenkontur des in Schritt IV) erhaltenen Extrusionsschaumstoffs bestimmt. Verfahren zur Kalibrierung sind dem Fachmann als solche bekannt.

Das formgebende Werkzeug kann direkt an der Düsenöffnung angeordnet sein. Ebenso ist es möglich, dass das formgebende Werkzeug von der Düsenöffnung entfernt angeordnet ist.

Formgebende Werkzeuge zum Kalibrieren des expandierten Schaums sind dem Fachmann als solche bekannt. Geeignete formgebende Werkzeuge umfassen beispielsweise Plattenkalibrierungen, Rollenabzüge, Dornkalibrierungen, Kettenabzüge und Bandabzüge. Um den Reibungskoeffizient zwischen den Werkzeugen und dem Extrusionsschaumstoff zu verringern, können die Werkzeuge beschichtet oder beheizt werden.

Durch die Kalibrierung in Schritt IV) wird also die geometrische Form des Querschnitts des erfindungsgemäßen Extrusionsschaumstoffs festgelegt. Vorzugsweise weist der Extrusionsschaumstoff einen rechtwinkligen Querschnitt in mindestens einer Dimension auf. Falls die Kalibrierung teils nur in bestimmten Richtungen vorgenommen wird, kann der Extrusionsschaumstoff von der idealen Geometrie an den freien Flächen abweichen. Die Dicke des Extrusionsschaumstoffs wird dabei einerseits durch die Düsenöffnung bestimmt, andererseits auch durch das formgebende Werkzeug, gleiches gilt für die Breite des Extrusionsschaumstoffes.

Zur spanenden Bearbeitung des in Schritt IV) erhaltenen Extrusionsschaumstoffs in Schritt V) eignen sich prinzipiell alle dem Fachmann bekannte Methoden.

Beispielsweise kann der Extrusionsschaumstoff durch sägen, fräsen, bohren oder hobeln spanend bearbeitet werden.

Bezogen auf ein rechtwinkliges Koordinatensystem wird die Länge des treibmittelhaltige Schaumstoffs als x-Richtung bezeichnet, die Breite als y-Richtung und die Dicke als z-Richtung. Die x-Richtung entspricht der Extrusionsrichtung des Extrusionsschaumstoffs, wenn die Herstellung mittels Extrusion erfolgt.

Als Additive, die in Schritt I) in der Polymerschmelze enthalten sein können und/oder während Schritt II), III) oder IV) zugegeben und/oder auf den expandierten Schaumstoff aufgebracht werden können, eignen sich prinzipiell alle dem Fachmann bekannten Additive wie beispielsweise Nukleierungsmittel, Flammschutzmittel, Farben, Prozessstabilisatoren, Verarbeitungshilfsmittel, Lichtstabilisatoren und Pigmente.

Bezüglich der Schicht (S2), die in einer Ausführungsform während und/oder im Anschluss an Schritt IV) auf den Extrusionsschaumstoff aufgebracht wird, gelten die weiter unten beschriebenen Ausführungen und Bevorzugungen.

Erfindungsgemäß wird in den Formkörper mindestens eine Faser (F) eingebracht.

Die in den Formkörper eingebrachte Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer Ausführungsform werden Faserbündel eingesetzt. Die Faserbündel setzen sich aus mehreren einzelnen Fasern (Filamenten) zusammen. Die Anzahl der Einzelfasern pro Bündel beträgt beispielsweise mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem treibmittelhaltigen Schaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist bevorzugt in einem Winkel α relativ zu Dickenrichtung (d) des Formkörpers bzw. zur Orthogonalen (der Oberfläche) der ersten Seite des Formkörpers in den Formkörper eingebracht. Der Winkel α kann beliebige Werte von 0 bis 90° annehmen. Beispielsweise ist die Faser (F) in einem Winkel α von 0 bis 60°, vorzugsweise von 0 bis 50°, mehr bevorzugt von 0 bis 15° oder von 10 bis 70 °, bevorzugt 30 bis 60 °, mehr bevorzugt von 30 bis 50°, noch mehr bevorzugt von 30 bis 45°, insbesondere von 45°, relativ zur Dickenrichtung (d) des Formkörpers in den treibmittelhaltigen Schaumstoff eingebracht.

In einer weiteren Ausführungsform werden zumindest zwei Fasern (F) in zwei unterschiedlichen Winkeln α, α₁ und α₂, eingebracht, wobei der Winkel α₁ vorzugsweise im Bereich von 0° bis 15° und der zweiten Winkel α₂ vorzugsweise im Bereich von 30 bis 50° liegt, insbesondere bevorzugt liegt α₁ im Bereich von 0° bis 5° und α₂ im Bereich von 40 bis 50°. Vorzugsweise weisen sämtliche Fasern (F) im erfindungsgemäßen Formkörper den gleichen Winkel α oder zumindest einen annähernd gleichen Winkel (Abweichung von maximal +/- 5°, vorzugsweise +/- 2°, besonders bevorzugt +/- 1°) auf.

Ein erfindungsgemäßer Formkörper enthält eine Vielzahl von Fasern (F), vorzugsweise als Faserbündel. Er umfasst mehr als 1000 Fasern (F) oder Faserbündel pro m², bevorzugt 4000 bis 40 000 pro m².

Sämtliche Fasern (F) können parallel zueinander im Formkörper vorliegen. Ebenso ist es möglich und erfindungsgemäß bevorzugt, dass zwei oder mehr Fasern (F) in einem Winkel β zueinander in dem Formkörper vorliegen. Unter dem Winkel β wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel β liegt vorzugsweise im Bereich β = 360°/n, wobei n eine ganzzahlige Zahl ist. Bevorzugt liegt n im Bereich von 2 bis 6, besonders bevorzugt im Bereich von 2 bis 4. Beispielsweise liegt der Winkel β bei 90°, 120° oder 180°. In einer weiteren Ausführungsform liegt der Winkel β im Bereich von 80 bis 100°, im Bereich von 110 bis 130° oder im Bereich von 170 bis 190°. In einer weiteren Ausführungsform werden mehr als zwei Fasern (F) in einem Winkel β zueinander eingebracht, beispielsweise drei oder vier Fasern (F). Diese drei oder vier Fasern (F) können jeweils zu den beiden benachbarten Fasern zwei unterschiedliche Winkel β, β₁ und β₂, aufweisen. Bevorzugt weisen alle Fasern (F) zu den beiden benachbarten Fasern (F) die gleichen Winkel β=β₁=β₂ auf. Beispielsweise beträgt der Winkel β 90°, dann beträgt der Winkel β₁ zwischen der ersten Faser (F1) und der zweiten Faser (F2) 90°, der Winkel β₂ zwischen der zweiten Faser (F2) und dritten Faser (F3) 90°, der Winkel β₃ zwischen der dritten und vierten Faser (F4) 90° und der Winkel β₄ zwischen der vierten Faser (F4) und der ersten Faser (F1) ebenfalls 90°. Als Winkel β zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel β zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern (F) oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern (F) oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand (aₓ) haben und entlang der y-Richtung den gleichen Abstand (a_{y}). Insbesondere bevorzugt weisen sie in x-Richtung und in y-Richtung den gleichen Abstand (a) auf, wobei a = aₓ = a_{y}, ist.

Liegen zwei oder mehr Fasern (F) in einem Winkel β zueinander vor, so weisen die ersten Fasern (F1), die parallel zueinander vorliegen, vorzugsweise ein reguläres Muster mit einem ersten Abstand (a₁) auf und die zweiten Fasern (F2), die parallel zueinander vorliegen und in einem Winkel β zu den ersten Fasern (F1) liegen, vorzugsweise ein reguläres Muster mit einem zweiten Abstand (a₂). In einer bevorzugten Ausführungsform weisen die ersten Fasern (F1) und die zweiten Fasern (F2) jeweils ein reguläres Muster mit einem Abstand (a) auf. Dann gilt a = a₁ = a₂.

Werden Fasern oder Faserbündel mit einem Winkel β zueinander in den Schaumstoff eingebracht, so ist es bevorzugt, dass die Fasern oder Faserbündel innerhalb jeder Richtung einem regulären Muster folgen.

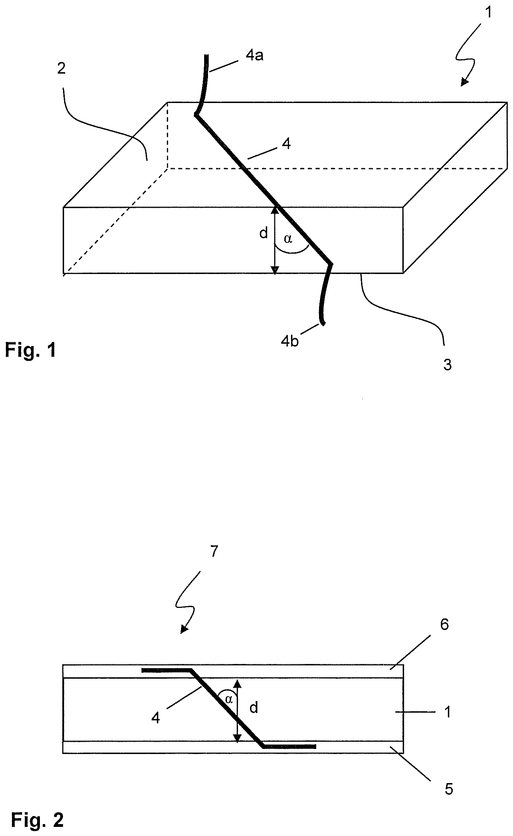

Figur 1 zeigt eine schematische Darstellung einer bevorzugten Ausführungsform des erfindungsgemäß hergestellten Formkörpers aus treibmittelhaltigem Schaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Schaumstoff umschlossen.

In Figur 1 befindet sich die Faser (4), die beispielsweise eine einzelne Faser oder ein Faserbündel, vorzugsweise ein Faserbündel, ist, in einem Winkel α relativ zur Dickenrichtung (d) des Formkörpers bzw. zur Orthogonalen (der Oberfläche) der ersten Seite (2) des Formkörpers. Der Winkel α kann beliebige Werte von 0 bis 90° annehmen, normalerweise beträgt er 0 bis 60°, vorzugsweise 0 bis 50°, besonders bevorzugt 0 bis 15° oder 10 bis 70°, bevorzugt 30 bis 60°, mehr bevorzugt 30 bis 50°, ganz besonders 30 bis 45°, insbesondere 45°. In Figur 1 ist der Übersichtlichkeit halber nur eine einzelne Faser (F) dargestellt.

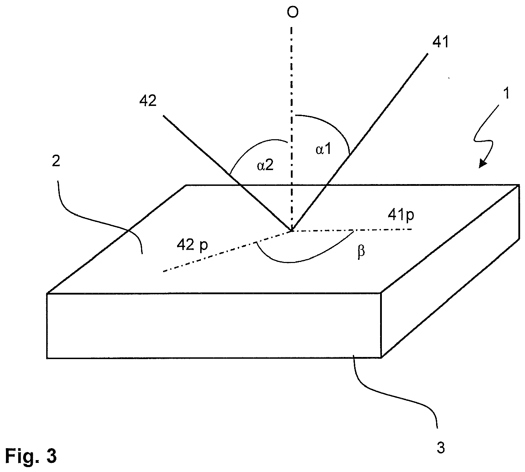

Figur 3 zeigt beispielhaft eine schematische Darstellung eines Teils der verschiedenen Winkel. Der in Figur 3 dargestellte Formkörper aus treibmittelhaltigem Schaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel α (α1). Die zweite Faser (42) bildet relativ zur Orthogonalen (O) der Oberfläche der ersten Seite (2) einen zweiten Winkel α (α2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel β.

Zur Herstellung des Formkörpers mit mindestens einer Faser (F) eignen sich prinzipiell alle dem Fachmann bekannten Methoden. Geeignete Verfahren sind beispielsweise in WO 2006/125561 oder in WO 2011/012587 beschrieben.

Beispielsweise erfolgt das teilweise Einbringen der mindestens einen Faser (F) in den treibmittelhaltigen Schaumstoff im erfindungsgemäßen Verfahren durch Einnähen unter Verwendung einer Nadel, vorzugsweise erfolgt das teilweise Einbringen durch die Schritte a) bis f):
a) gegebenenfalls Aufbringen von mindestens einer Schicht (S2) auf mindestens eine Seite des treibmittelhaltigen Schaumstoffs,
b) Erzeugung von einem Loch je Faser (F) im treibmittelhaltigen Schaumstoff und gegebenenfalls in der Schicht (S2), wobei sich das Loch von einer ersten Seite zu einer zweiten Seite des treibmittelhaltigen Schaumstoffs und gegebenenfalls durch die Schicht (S2) erstreckt,
c) Bereitstellung von mindestens einer Faser (F) auf der zweiten Seite des treibmittelhaltigen Schaumstoffs,
d) Durchführen einer Nadel von der ersten Seite des treibmittelhaltigen Schaumstoffs durch das Loch zu der zweiten Seite des treibmittelhaltigen Schaumstoffs und gegebenenfalls Durchführung der Nadel durch die Schicht (S2),
e) Befestigen von mindestens einer Faser (F) an der Nadel auf der zweiten Seite des treibmittelhaltigen Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt, besonders bevorzugt werden die Schritte b) und d) gleichzeitig durchgeführt.

Das Aufbringen von mindestens einer Schicht (S2) in Schritt a) kann beispielsweise wie vorstehend beschrieben während und/oder direkt im Anschluss an Schritt IV) erfolgen.

In einer besonders bevorzugten Ausführungsform werden die Schritte b) und d) gleichzeitig durchgeführt. In dieser Ausführungsform wird das Loch von der ersten Seite zu der zweiten Seite des treibmittelhaltigen Schaumstoffs durch das Durchführen einer Nadel von der ersten Seite des treibmittelhaltigen Schaumstoffs zu der zweiten Seite des treibmittelhaltigen Schaumstoffs erzeugt.

In dieser Ausführungsform kann das Einbringen der mindestens einen Faser (F) beispielsweise die folgenden Schritte umfassen:
a) gegebenenfalls Aufbringen einer Schicht (S2) auf mindestens eine Seite des treibmittelhaltigen Schaumstoffs,
b) Bereitstellen von mindestens einer Faser (F) auf der zweiten Seite des treibmittelhaltigen Schaumstoffs,
c) Erzeugung von einem Loch je Faser (F) im treibmittelhaltigen Schaumstoff und gegebenenfalls in der Schicht (S2), wobei sich das Loch von der ersten Seite zu einer zweiten Seite des treibmittelhaltigen Schaumstoffs und gegebenenfalls durch die Schicht (S2) erstreckt und wobei die Erzeugung des Lochs durch das Durchführen einer Nadel durch den treibmittelhaltigen Schaumstoffs und gegebenenfalls durch die Schicht (S2) erfolgt,
d) Befestigen von mindestens einer Faser (F) an der Nadel auf der zweiten Seite des treibmittelhaltigen Schaumstoffs,
e) Rückführen der Nadel samt Faser (F) durch das Loch, so dass die Faser (F) sich mit dem Faserbereich (FB2) innerhalb des Formkörpers befindet und von dem treibmittelhaltigen Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,
f) gegebenenfalls Abschneiden der Faser (F) an der zweiten Seite und
g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den treibmittelhaltigen Schaumstoff gemäß der vorher beschriebenen Schritte eingebracht.

Das erfindungsgemäße Verfahren wird durchgeführt, wenn im treibmittelhaltigen Schaumstoff des Formkörpers zum Zeitpunkt des teilweisen Einbringens von mindestens einer Faser (F) mindestens 5 Gew.-%, bevorzugt mindestens 10 Gew.-%, besonders bevorzugt mindestens 25 Gew.-% und am meisten bevorzugt mindestens 50 Gew.-% der Menge an mindestens einem Treibmittel, bevorzugt an allen Treibmitteln, noch enthalten ist, bezogen auf die Menge an dem mindestens einen Treibmittel, bevorzugt an allen Treibmitteln, die zur Herstellung des treibmittelhaltigen Schaumstoffs eingesetzt wurden.

Es ist außerdem bevorzugt, dass das erfindungsgemäße Verfahren durchgeführt wird, wenn im treibmittelhaltigen Schaumstoff des Formkörpers zum Zeitpunkt des teilweisen Einbringens von mindestens einer Faser (F) höchstens 100 Gew.-%, bevorzugt höchstens 99 Gew.-% und besonders bevorzugt höchstens 95 Gew.-% der Menge an mindestens einem Treibmittel, bevorzugt an allen Treibmitteln, noch enthalten ist, bezogen auf die Menge an dem mindestens einen Treibmittel, bevorzugt an allen Treibmitteln, die zur Herstellung des treibmittelhaltigen Schaumstoffs eingesetzt wurden.

Die "Menge an allen Treibmitteln" bezieht sich auf sämtliche im treibmittelhaltigen Schaumstoff enthaltene Treibmittel. Enthält der treibmittelhaltige Schaumstoff also genau ein Treibmittel, so bezieht sich die Menge an Treibmittel auf genau ein Treibmittel. Enthält der treibmittelhaltige Schaumstoff dagegen zwei oder mehr Treibmittel, so bezieht sich die Menge an Treibmittel auf die zwei oder mehr Treibmittel.

Für die Bestimmung des Treibmittelgehaltes stehen mehrere Methoden zur Verfügung. Bei ausreichender thermischer Stabilität der eingesetzten Schaumstoffs kann durch thermogravimetrische Analyse (TGA) der Schaumstoff bis zur vollständigen Desorption aller Treibmittel erhitzt werden. Der Massenverlust entspricht dann der noch vorliegenden Menge an Treibmittel im Schaumstoff.

Für die Analyse einzelner Treibmittel können beispielsweise folgende Verfahren genutzt werden: Für die Analyse einzelner organischer Treibmittel kann beispielsweise Headspace-Gaschromatographie angewendet werden. Die Proben werden in einem Lösungsmittel gelöst und die Treibmittelmenge bzw. -art durch quantitative Chromatographie ermittelt. Verfahren hierzu sind dem Fachmann bekannt. Bei Verwendung von Wasser als Treibmittel kann durch coulometrische Karl-Fischer-Titration der Wassergehalt bestimmt werden.

Es ist außerdem bevorzugt, dass das erfindungsgemäße Verfahren durchgeführt wird, wenn im treibmittelhaltigen Schaumstoff des Formkörpers zum Zeitpunkt des teilweisen Einbringens von mindestens einer Faser (F) mindestens eines der Treibmittel noch zu mehr als 20 Gew.-%, bevorzugt zu mehr als 50 Gew.-% und insbesondere bevorzugt zu mehr als 70 Gew.-% enthalten ist, bezogen auf die Menge des mindestens einen Treibmittels, das zum Zeitpunkt der Fertigstellung des treibmittelhaltigen Schaumstoffs im treibmittelhaltigen Schaumstoff enthalten ist.

Es ist außerdem bevorzugt, dass das erfindungsgemäße Verfahren durchgeführt wird, wenn im treibmittelhaltigen Schaumstoff des Formkörpers zum Zeitpunkt des teilweisen Einbringens von mindestens einer Faser (F) höchstens 100 Gew.-%, bevorzugt höchstens 99 Gew.-% und besonders bevorzugt höchstens 95 Gew.-% der Menge an mindestens einem Treibmittel noch enthalten ist, bezogen auf die Menge des mindestens einen Treibmittels, das zum Zeitpunkt der Fertigstellung des treibmittelhaltigen Schaumstoffs im treibmittelhaltigen Schaumstoff enthalten ist.

Ist mehr als ein Treibmittel in dem Schaumstoff enthalten, so bedeutet dies, dass mindestens eines dieser Treibmittel noch zu mehr als 20 Gew.-%, bevorzugt zu mehr als 50 Gew.-% und insbesondere bevorzugt zu mehr als 70 Gew.-% enthalten ist. Die weiteren Treibmittel können auch in geringeren Mengen enthalten sein.

Es ist weiterhin bevorzugt, dass das teilweise Einbringen von mindestens einer Faser (F) in den treibmittelhaltigen Schaumstoff nach spätestens zwölf Wochen, vorzugsweise spätestens sechs Wochen, besonders bevorzugt spätestens drei Wochen, insbesondere 48 Stunden, und insbesondere spätestens 2 Stunden, bezogen auf den Zeitpunkt der Fertigstellung des treibmittelhaltigen Schaumstoffs, erfolgt.

Es ist weiterhin unabhängig von der Treibmittelmenge bevorzugt, dass das teilweise Einbringen von mindestens einer Faser (F) in den treibmittelhaltigen Schaumstoff vor Ablauf der Stabilisierungszeit, vorzugsweise spätestens nach Ablauf der Hälfte der Stabilisierungszeit, besonders bevorzugt spätestens nach Ablauf des Viertels der Stabilisierungszeit, bezogen auf die Stabilisierungszeit des reinen Schaumstoffs erfolgt.

Vorzugsweise erfüllt das erfindungsgemäße Verfahren außerdem mindestens eine der folgenden Optionen:
i) Die Desorption von mindestens einem Treibmittel des treibmittelhaltigen Schaumstoffs des Formkörpers, bevorzugt aller Treibmittel des treibmittelhaltigen Schaumstoffs des Formkörpers, wird durch die Einbringung der Faser (F) um mindestens den Faktor 1,2, bevorzugt um mindestens den Faktor 1,5, besonders bevorzugt um mindestens den Faktor 2,0 und insbesondere bevorzugt um mindestens den Faktor 3,0 erhöht gegenüber einem treibmittelhaltigen Schaumstoff ohne Fasern und/oder
ii) die Stabilisierungszeit des treibmittelhaltigen Schaumstoffs wird durch die Einbringung der mindestens einen Faser (F) um mindestens den Faktor 1,2, bevorzugt um mindestens den Faktor 1,5, besonders bevorzugt um mindestens den Faktor 2,0 und insbesondere bevorzugt um mindestens den Faktor 3,0 reduziert gegenüber einem treibmittelhaltigen Schaumstoff ohne Fasern.

Im Allgemeinen wird die Desorption von mindestens einem Treibmittel des treibmittelhaltigen Schaumstoffs des Formkörpers, bevorzugt aller Treibmittel des treibmittelhaltigen Schaumstoffs des Formkörpers, durch die Einbringung der Faser (F) um höchstens den Faktor 10 000 000, bevorzugt um höchstens den Faktor 100 000, besonders bevorzugt um höchstens den Faktor 1000 und insbesondere bevorzugt um höchstens den Faktor 100 erhöht gegenüber einem treibmittelhaltigen Schaumstoff ohne Fasern.

Unter der "Desorption von mindestens einem Treibmittel" wird vorliegend der Austausch des im treibmittelhaltigen Schaumstoff enthaltenen mindestens einen Treibmittels durch Luft der Umgebung verstanden. Durch die Desorption des mindestens einen Treibmittels wird also das im Schaumstoff enthaltene mindestens eine Treibmittel durch Luft ersetzt, so dass der treibmittelhaltige Schaumstoff zunehmend weniger Treibmittel und mehr Luft enthält.

Die Desorption des mindestens einen Treibmittels wird gemessen durch die vorher beschriebenen Methoden zur Treibmittelanalyse. Der Treibmittelgehalt der Schaumstoffe wird dazu vor der Herstellung der Formkörper bestimmt. Ein Teil des Schaumstoffs wird anschließend zum erfindungsgemäßen Formkörper verarbeitet, der andere Teil wird als Referenzmuster bei identischen Umgebungsbedingungen gelagert. An beiden Schaumstoffen wird nach diskreten Zeitpunkten die Treibmittelmenge bestimmt. Daraus ergibt sich die erfindungsgemäße, deutlich raschere Desorption aus dem Formkörper im Vergleich zur unbehandelten Referenzprobe. Für die Beurteilung des erhöhten Desorptionsfaktors ist die Messung innerhalb der ersten beiden Wochen nach der Einbringung der Fasern (F) erforderlich. Der genannte Faktor bezieht sich auf einen beliebigen Zeitpunkt innerhalb dieses Zeitraums.

Im Allgemeinen wird die Stabilisierungszeit des treibmittelhaltigen Schaumstoffs durch die Einbringung der mindestens einen Faser (F) um höchstens den Faktor 1000, bevorzugt um höchstens den Faktor 500, besonders bevorzugt um höchstens den Faktor 200 und insbesondere bevorzugt um höchstens den Faktor 100 reduziert gegenüber einem treibmittelhaltigen Schaumstoff ohne Faser.

Unter der Stabilisierungszeit wird der Zeitraum zwischen der Herstellung des Schaumstoffs und dem Zeitpunkt verstanden, der für eine ausreichende Dimensionsstabilität des Schaumstoffs unter Temperaturbelastung mindestens erforderlich ist. Bei der späteren Verarbeitungs- bzw. Gebrauchstemperatur des Schaumstoffs müssen in der Regel die geometrischen Maße des Schaumstoffs nahezu konstant bleiben. Beispielsweise dürfen keine signifikanten Änderungen der Dicke, Länge und Breite auftreten. Zudem sind andere Verformungen wie lokale oder globale Einfallstellen, Verwölbungen und Kollabierungen zu vermeiden.

Zur Bestimmung der Dimensionsstabilität wird der Schaumstoff definierter Größe (beispielsweise Platten mit einer Breite von 500 mm und einer Länge von 1 m) in einem Wärmeschrank für mehrere Stunden (beispielsweise mehrere Stunden bis Tage) bei konstanter Temperatur gelagert. Anschließend werden die Plattengeometrien bestimmt und mit dem Zustand vor der Wärmelagerung verglichen. In vielen Fällen sind beispielsweise Dimensionsänderungen von mehr als 3 % in den verschiedenen Raumrichtungen nicht zulässig, zudem sind Verwölbungen und Einfallstellen zu vermeiden Die exakten Bedingungen hängen vom späteren Einsatzzweck des Schaumstoffs bzw. des Formteils ab.

In allen Fällen beschreibt die Stabilisierungszeit den Zeitraum, der zum Erreichen einer ausreichenden Stabilisierung nach der Schaumstoffherstellung erforderlich ist. Je nach Dichte, Dicke, Struktur und Rezeptur von treibmittelgeschäumten Schaumstoffen kann sich der Zeitraum im Bereich von wenigen Sekunden bis mehreren Monaten bewegen. Dies gilt insbesondere bei der Verwendung von organischen Treibmitteln, die eine plastifizierende Wirkung auf den Schaumstoff ausüben.

Gegenstand der vorliegenden Erfindung ist außerdem ein Formkörper, hergestellt durch das erfindungsgemäße Verfahren.

Gegenstand der vorliegenden Erfindung ist außerdem ein Paneel, das mindestens einen erfindungsgemäß hergestellten Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem
i) der Faserbereich (FB1) der Faser (F) teilweise oder vollständig, vorzugsweise vollständig, mit der ersten Schicht (S1) in Kontakt ist, und/oder
ii) der Faserbereich (FB3) der Faser (F) teilweise oder vollständig, vorzugsweise vollständig, mit der zweiten Schicht (S1) in Kontakt ist, und/oder
iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben.

In einer weiteren erfindungsgemäßen Ausführungsform des Paneels enthält die mindestens eine Schicht (S1) zusätzlich mindestens ein faserförmiges Material, wobei
i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m² enthält, und/oder
ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäß hergestellten Formkörper (1) umfasst, wie beispielsweise vorstehend im Rahmen der Ausführungsform zu Figur 1 dargestellt. Soweit nicht anders ausgeführt, haben die Bezugszeichen bei sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zueinander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und/ oder Membranfolien gearbeitet werden. Besonders bevorzugt sind die folgenden Varianten:
i) Einsatz einer Fließhilfe auf nur einer Seite des Aufbaus, und/oder
ii) Einsatz einer Fließhilfe auf beiden Seiten des Aufbaus, und/oder
iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder
iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäß hergestellten Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Patentansprüche

1. Verfahren zur Herstellung eines Formkörpers mit mindestens einer Faser (F), **dadurch gekennzeichnet, dass** in einen Formkörper aus treibmittelhaltigem Schaumstoff mindestens eine Faser (F) in den treibmittelhaltigen Schaumstoff teilweise eingebracht wird, wodurch sich die Faser (F) mit einem Faserbereich (FB2) innerhalb des Formkörpers befindet und von dem treibmittelhaltigen Schaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Formkörper mehr als 1000 Fasern (F) pro m² umfasst und wobei im treibmittelhaltigen Schaumstoff des Formkörpers zum Zeitpunkt des teilweisen Einbringens von mindestens einer Faser (F) mindestens 5 Gew.-% der Menge an mindestens einem Treibmittel noch enthalten ist, bezogen auf die Menge an dem mindestens einen Treibmittel, die zur Herstellung des treibmittelhaltigen Schaumstoffs eingesetzt wird, wobei das mindestens eine Treibmittel des treibmittelhaltigen Schaumstoffs einen Siedepunkt bei Normaldruck von mindestens 20 °C aufweist und/oder ein organisches Treibmittel mit einem Molekulargewicht von mindestens 30 g/mol ist.

2. Verfahren gemäß Anspruch 1, **dadurch gekennzeichnet, dass** im treibmittelhaltigen Schaumstoff des Formkörpers zum Zeitpunkt des teilweisen Einbringens von mindestens einer Faser (F) mindestens 10 Gew.-% der Menge an mindestens einem Treibmittel noch enthalten ist, bezogen auf die Menge an dem mindestens einen Treibmittel,die zur Herstellung des treibmittelhaltigen Schaumstoffs eingesetzt werden.

3. Verfahren gemäß Anspruch 1 oder 2, **dadurch gekennzeichnet, dass** mindestens eines der Treibmittel des treibmittelhaltigen Schaumstoffs
i) einen Siedepunkt bei Normaldruck von mindestens 35°C aufweist, und / oder
ii) ein organisches Treibmittel mit einem Molekulargewicht von mindestens 45 g/mol ist.

4. Verfahren gemäß einem der Ansprüche 1 bis 3, **dadurch gekennzeichnet, dass**
i) die Desorption von mindestens einem Treibmittel des treibmittelhaltigen Schaumstoffs des Formkörpers, bestimmt wie in der Beschreibung angegeben, durch die Einbringung der Faser (F) um mindestens den Faktor 1,2 erhöht wird gegenüber einem treibmittelhaltigen Schaumstoff ohne Fasern, und/oder
ii) die Stabilisierungszeit des treibmittelhaltigen Schaumstoffs, bestimmt wie in der Beschreibung angegeben, durch die Einbringung der mindestens einen Faser (F) um mindestens den Faktor 1,2 reduziert wird, gegenüber einem treibmittelhaltigen Schaumstoff ohne Fasern.

5. Verfahren gemäß einem der Ansprüche 1 bis 4, **dadurch gekennzeichnet, dass** der treibmittelhaltige Schaumstoff ein Partikelschaumstoff, ein Extrusionsschaumstoff, ein Reaktivschaumstoff oder ein Batchschaumstoff ist.

6. Verfahren gemäß einem der Ansprüche 1 bis 5, **dadurch gekennzeichnet, dass** der Schaumstoff des treibmittelhaltigen Schaumstoffs auf Basis von mindestens einem Polymer ist, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketone, Polypropylen, Polyethylen, Polyamid, Polyamidimid, Polyetherimid, Polycarbonat, Polyacrylate, Polymilchsäure, Polyvinylchlorid, thermoplastischen Elastomeren oder ein Gemisch davon.

7. Verfahren gemäß einem der Ansprüche 1 bis 6, **dadurch gekennzeichnet, dass**
i) die Faser (F) eine einzelne Faser oder ein Faserbündel ist und/oder
ii) die Faser (F) eine organische, anorganische, metallische, keramische Faser ist, und/oder
iii) die Faser (F) als Faserbündel eingesetzt wird mit einer Anzahl von Einzelfasern pro Bündel von mindestens 10 und/oder
iv) der Faserbereich (FB1) und der Faserbereich (FB3) jeweils unabhängig voneinander 1 bis 45 % und der Faserbereich (FB2) 10 bis 98 % der Gesamtlänge einer Faser (F) ausmachen.

8. Verfahren gemäß einem der Ansprüche 1 bis 7, **dadurch gekennzeichnet, dass**
i) die Faser (F) in einem Winkel α von 0 bis 60° oder von 10 bis 70° relativ zur Dickenrichtung (d) des Formkörpers in den treibmittelhaltigen Schaumstoff eingebracht ist, und/oder
ii) im Formkörper die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt, und/oder
iii) der Formkörper 4 000 bis 40 000 Fasern (F) pro m² umfasst.

9. Verfahren gemäß einem der Ansprüche 1 bis 8, **dadurch gekennzeichnet, dass** das teilweise Einbringen von mindestens einer Faser (F) in den treibmittelhaltigen Schaumstoff durch Einnähen unter Verwendung einer Nadel erfolgt.

10. Formkörper, hergestellt nach einem Verfahren gemäß einem der Ansprüche 1 bis 9.

11. Paneel umfassend mindestens einen Formkörper gemäß Anspruch 10 und mindestens eine Schicht (S1).

12. Paneel gemäß Anspruch 11, **dadurch gekennzeichnet, dass** die Schicht (S1) mindestens ein Harz umfasst.

13. Paneel gemäß Anspruch 11 oder 12, **dadurch gekennzeichnet, dass** die Schicht (S1) zusätzlich mindestens ein faserförmiges Material enthält, wobei
i) das faserförmige Material Fasern in Form von ein oder mehreren Lagen aus Schnittfasern, Vliesen, Gelegen, Gestricken und/oder Geweben enthält, und/oder
ii) das faserförmige Material organische, anorganische, metallische oder keramische Fasern enthält.

14. Paneel gemäß einem der Ansprüche 11 bis 13, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

15. Paneel gemäß einem der Ansprüche 11 bis 14, **dadurch gekennzeichnet, dass**
i) der Faserbereich (FB1) der Faser (F) teilweise oder vollständig mit der ersten Schicht (S1) in Kontakt ist, und/oder
ii) der Faserbereich (FB3) der Faser (F) teilweise oder vollständig mit der zweiten Schicht (S1) in Kontakt ist, und/oder
iii) das Paneel zwischen mindestens einer Seite des Formkörpers und mindestens einer Schicht (S1) mindestens eine Schicht (S2) aufweist.

16. Verfahren zur Herstellung eines Paneels gemäß einem der Ansprüche 11 bis 15, **dadurch gekennzeichnet, dass** die mindestens eine Schicht (S1) als reaktives, viskoses Harz auf einen Formkörper gemäß Anspruch 10 aufgebracht und ausgehärtet wird.

17. Verwendung eines Formkörpers gemäß Anspruch 10 oder eines Paneels gemäß einem der Ansprüche 11 bis 15 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Claims

1. A process for producing a molding comprising at least one fiber (F), which comprises partially introducing at least one fiber (F) into a molding made of blowing agent-containing foam in said blowing agent-containing foam, as a result of which the fiber (F) is present with a fiber region (FB2) within the molding and is surrounded by the blowing agent-containing foam, while a fiber region (FB1) of the fiber (F) projects out of a first side of the molding and a fiber region (FB3) of the fiber (F) projects out of a second side of the molding, where the molding comprises more than 1000 fibers (F) per m² and where the blowing agent-containing foam of the molding at the time of partial introduction of at least one fiber (F) still comprises at least 5% by weight of the amount of at least one blowing agent, based on the amount of the at least one blowing agent which is used for production of the blowing agent-containing foam, where the at least one blowing agent in the blowing agent-containing foam has a boiling point at standard pressure of at least 20°C and/or is an organic blowing agent having a molecular weight of at least 30 g/mol.

2. The process according to claim 1, wherein the blowing agent-containing foam of the molding at the time of partial introduction of at least one fiber (F) still comprises at least 10% by weight of the amount of at least one blowing agent, based on the amount of the at least one blowing agent, which are used for production of the blowing agent-containing foam.

3. The process according to claim 1 or 2, wherein at least one of the blowing agents in the blowing agent-containing foam
i) has a boiling point at standard pressure of at least 35°C, and/or
ii) is an organic blowing agent having a molecular weight of at least 45 g/mol.

4. The process according to any of claims 1 to 3, wherein
i) the desorption of at least one blowing agent in the blowing agent-containing foam of the molding, determined as stated in the description, as a result of the introduction of the fiber (F), is increased by at least a factor of 1.2 compared to a blowing agent-containing foam without fibers, and/or
ii) the stabilization time of the blowing agent-containing foam, determined as stated in the description, as a result of the introduction of the at least one fiber (F), is reduced by at least a factor of 1.2 compared to a blowing agent-containing foam without fibers.

5. The process according to any of claims 1 to 4, wherein the blowing agent-containing foam is a molded foam, an extruded foam, a reactive foam or a masterbatch foam.

6. The process according to any of claims 1 to 5, wherein the foam of the blowing agent-containing foam is based on at least one polymer selected from polystyrene, polyester, polyphenylene oxide, a copolymer prepared from phenylene oxide, a copolymer prepared from styrene, polyaryl ether sulfone, polyphenylene sulfide, polyaryl ether ketones, polypropylene, polyethylene, polyamide, polyamide imide, polyether imide, polycarbonate, polyacrylates, polylactic acid, polyvinyl chloride, thermoplastic elastomers, or a mixture thereof.

7. The process according to any of claims 1 to 6, wherein
i) the fiber (F) is a single fiber or a fiber bundle, and/or
ii) the fiber (F) is an organic, inorganic, metallic or ceramic fiber, and/or
iii) the fiber (F) is used in the form of a fiber bundle having a number of single fibers per bundle of at least 10, and/or
iv) the fiber region (FB1) and the fiber region (FB3) each independently account for 1% to 45% and the fiber region (FB2) for 10% to 98% of the total length of a fiber (F).

8. The process according to any of claims 1 to 7, wherein
i) the fiber (F) has been introduced into the blowing agent-containing foam at an angle α of 0° to 60° or of 10° to 70° relative to the thickness direction (d) of the molding, and/or
ii) in the molding, the first side of the molding from which the fiber region (FB1) of the fiber (F) projects is opposite the second side of the molding from which the fiber region (FB3) of the fiber (F) projects, and/or
iii) the molding comprises 4000 to 40 000 fibers (F) per m².

9. The process according to any of claims 1 to 8, wherein at least one fiber (F) is partially introduced into the blowing agent-containing foam by sewing it in using a needle.

10. A molding produced by the process according to any of claims 1 to 9.

11. A panel comprising at least one molding according to claim 10 and at least one layer (S1).

12. The panel according to claim 11, wherein the layer (S1) comprises at least one resin.

13. The panel according to claim 11 or 12, wherein the layer (S1) additionally comprises at least one fibrous material, where
i) the fibrous material comprises fibers in the form of one or more laminas of chopped fibers, webs, scrims, knits and/or weaves, and/or
ii) the fibrous material comprises organic, inorganic, metallic or ceramic fibers.

14. The panel according to any of claims 11 to 13, wherein the panel has two layers (S1) and the two layers (S1) are each mounted on a side of the molding opposite the respective other side in the molding.

15. The panel according to any of claims 11 to 14, wherein
i) the fiber region (FB1) of the fiber (F) is in partial or complete contact with the first layer (S1), and/or
ii) the fiber region (FB3) of the fiber (F) is in partial or complete contact with the second layer (S1), and/or
iii) the panel has at least one layer (S2) between at least one side of the molding and at least one layer (S1).

16. A process of producing a panel according to any of claims 11 to 15, which comprises applying and curing the at least one layer (S1) in the form of a reactive viscous resin on a molding according to claim 10.

17. The use of a molding according to claim 10 or of a panel according to any of claims 11 to 15 for rotor blades in wind turbines, in the transport sector, in the construction sector, in automobile construction, in shipbuilding, in rail vehicle construction, for container construction, for sanitary installations and/or in aerospace.

## Revendications

1. Procédé de fabrication d'un corps moulé comprenant au moins une fibre (F), **caractérisé en ce que**, dans un corps moulé constitué par une mousse contenant un agent gonflant, au moins une fibre (F) est introduite partiellement dans la mousse contenant un agent gonflant, la fibre (F) se trouvant ainsi avec une zone de fibre (FB2) à l'intérieur du corps moulé et entourée par la mousse contenant un agent gonflant, tandis qu'une zone de fibre (FB1) de la fibre (F) dépasse d'un premier côté du corps moulé et une zone de fibre (FB3) de la fibre (F) dépasse d'un deuxième côté du corps moulé, le corps moulé comprenant plus de 1 000 fibres (F) par m² et, au moment de l'introduction partielle d'au moins une fibre (F), au moins 5 % en poids de la quantité d'au moins un agent gonflant étant encore contenue dans la mousse contenant un agent gonflant, par rapport à la quantité dudit au moins un agent gonflant qui est utilisée pour la fabrication de la mousse contenant un agent gonflant, ledit au moins un agent gonflant de la mousse contenant un agent gonflant présentant un point d'ébullition à pression normale d'au moins 20 °C et/ou étant un agent gonflant organique ayant un poids moléculaire d'au moins 30 g/mol.

2. Procédé selon la revendication 1, **caractérisé en ce qu'**au moment de l'introduction partielle d'au moins une fibre (F), au moins 10 % en poids de la quantité d'au moins un agent gonflant est encore contenue dans la mousse contenant un agent gonflant, par rapport à la quantité dudit au moins un agent gonflant qui est utilisée pour la fabrication de la mousse contenant un agent gonflant.

3. Procédé selon la revendication 1 ou 2, **caractérisé en ce qu'**au moins un des agents gonflants de la mousse contenant un agent gonflant
i) présente un point d'ébullition à pression normale d'au moins 35 °C et/ou
ii) est un agent gonflant organique ayant un poids moléculaire d'au moins 45 g/mol.

4. Procédé selon l'une quelconque des revendications 1 à 3, **caractérisé en ce que**
i) la désorption d'au moins un agent gonflant de la mousse contenant un agent gonflant du corps moulé, déterminée tel qu'indiqué dans la description, est augmentée d'au moins un facteur de 1,2 par l'introduction de la fibre (F), en comparaison d'une mousse contenant un agent gonflant sans fibres, et/ou
ii) le temps de stabilisation de la mousse contenant un agent gonflant, déterminé tel qu'indiqué dans la description, est réduit d'au moins un facteur de 1,2 par l'introduction de ladite au moins une fibre (F), en comparaison d'une mousse contenant un agent gonflant sans fibres.

5. Procédé selon l'une quelconque des revendications 1 à 4, **caractérisé en ce que** la mousse contenant un agent gonflant est une mousse particulaire, une mousse d'extrusion, une mousse réactive ou une mousse en lots.

6. Procédé selon l'une quelconque des revendications 1 à 5, **caractérisé en ce que** la mousse de la mousse contenant un agent gonflant est à base d'au moins un polymère, qui est choisi parmi le polystyrène, le polyester, le polyoxyde de phénylène, un copolymère fabriqué à partir d'oxyde de phénylène, un copolymère fabriqué à partir de styrène, la polyaryléther-sulfone, le polysulfure de phénylène, les polyaryléther-cétones, le polypropylène, le polyéthylène, le polyamide, le polyamide-imide, le polyéther-imide, le polycarbonate, les polyacrylates, l'acide polylactique, le polychlorure de vinyle, les élastomères thermoplastiques ou un mélange de ceux-ci.

7. Procédé selon l'une quelconque des revendications 1 à 6, **caractérisé en ce que**
i) la fibre (F) est une fibre individuelle ou un faisceau de fibres et/ou
ii) la fibre (F) est une fibre organique, inorganique, métallique, céramique, et/ou
iii) la fibre (F) est utilisée sous la forme d'un faisceau de fibres avec un nombre de fibres individuelles par faisceau d'au moins 10, et/ou
iv) la zone de fibre (FB1) et la zone de fibre (FB3) représentent chacune indépendamment l'une de l'autre 1 à 45 % et la zone de fibre (FB2) 10 à 98 % de la longueur totale d'une fibre (F).

8. Procédé selon l'une quelconque des revendications 1 à 7, **caractérisé en ce que**
i) la fibre (F) est introduite à un angle α de 0 à 60° ou de 10 à 70° par rapport à la direction d'épaisseur (d) du corps moulé dans la mousse contenant un agent gonflant, et/ou
ii) dans le corps moulé, le premier côté du corps moulé, duquel la zone de fibre (FB1) de la fibre (F) dépasse, est opposé au deuxième côté du corps moulé, duquel la zone de fibre (FB3) de la fibre (F) dépasse, et/ou
iii) le corps moulé comprend 4 000 à 40 000 fibres (F) par m².

9. Procédé selon l'une quelconque des revendications 1 à 8, **caractérisé en ce que** l'introduction partielle d'au moins une fibre (F) dans la mousse contenant un agent gonflant a lieu par couture en utilisant une aiguille.

10. Corps moulé, fabriqué par un procédé selon l'une quelconque des revendications 1 à 9.

11. Panneau comprenant au moins un corps moulé selon la revendication 10 et au moins une couche (S1).

12. Panneau selon la revendication 11, **caractérisé en ce que** la couche (S1) comprend au moins une résine.

13. Panneau selon la revendication 11 ou 12, **caractérisé en ce que** la couche (S1) contient en outre au moins un matériau fibreux,
i) le matériau fibreux contenant des fibres sous la forme d'une ou de plusieurs strates de fibres coupées, de non-tissés, de nappes, de tricots et/ou de tissus, et/ou
ii) le matériau fibreux contenant des fibres organiques, inorganiques, métalliques ou céramiques.

14. Panneau selon l'une quelconque des revendications 11 à 13, **caractérisé en ce que** le panneau comprend deux couches (S1) et les deux couches (S1) sont chacune disposées sur un côté du corps moulé qui est opposé à l'autre côté respectif dans le corps moulé.

15. Panneau selon l'une quelconque des revendications 11 à 14, **caractérisé en ce que**
i) la zone de fibre (FB1) de la fibre (F) est partiellement ou entièrement en contact avec la première couche (S1), et/ou
ii) la zone de fibre (FB3) de la fibre (F) est partiellement ou entièrement en contact avec la deuxième couche (S1), et/ou
iii) le panneau comprend au moins une couche (S2) entre au moins un côté du corps moulé et au moins une couche (S1).

16. Procédé de fabrication d'un panneau selon l'une quelconque des revendications 11 à 15, **caractérisé en ce que** ladite au moins une couche (S1) est appliquée sur un corps moulé selon la revendication 10 sous la forme d'une résine visqueuse réactive, et durcie.

17. Utilisation d'un corps moulé selon la revendication 10 ou d'un panneau selon l'une quelconque des revendications 11 à 15 pour des pales de rotor dans des installations éoliennes, dans le secteur des transports, dans le secteur du bâtiment, dans la construction d'automobiles, dans la construction de navires, dans la construction de véhicules ferroviaires, pour la construction de conteneurs, pour des installations sanitaires et/ou dans l'aéronautique et l'astronautique.
